# EUROPEAN PATENT SPECIFICATION

(11) **EP 4 415 479 B1**
(45) Date of publication and mention of the grant of the patent: **11.11.2026**
(21) Application number: 24152163.2
(22) Date of filing: 16.01.2024
(51) Int. Cl.: H05B 3/28, G01K 7/22

(54) **RESISTANCE TEMPERATURE DETECTOR (RTD) SENSOR-BASED FAULT STATUS REPORTING FOR A POSITIVE TEMPERATURE COEFFICIENT (PTC) HEATER**
SENSORBASIERTE FEHLERSTATUSMELDUNG EINES WIDERSTANDSTEMPERATURDETEKTORS FÜR EIN HEIZER MIT POSITIVEM TEMPERATURKOEFFIZIENTEN (PTC)
RAPPORT D'ÉTAT DE DÉFAILLANCE BASÉ SUR UN CAPTEUR DE DÉTECTEUR DE TEMPÉRATURE DE RÉSISTANCE (RTD) POUR UN DISPOSITIF DE CHAUFFAGE À COEFFICIENT DE TEMPÉRATURE POSITIF (PTC)

(30) Priority: 02.02.2023 IN 202311006749
(43) Date of publication of application: 14.08.2024
(73) Proprietor: Goodrich Corporation, Charlotte, NC 28217-4578 (US)
(72) Inventor: BAMBILA, Gururaja, Bangalore (IN); HIREMATH, Manjunath, Bangalore (IN); PATIL, Rhushikesh, Bangalore (IN); GUNDU, Srinivas Magaji, Bangalore (IN)
(74) Representative: Dehns

(56) References cited:
- WO-A1-2020/180273
- CN-A- 102 261 969
- CN-A- 108 955 917
- JP-A- H11 251 037
- KR-B1- 102 348 172
- US-A1- 2010 280 788
- US-A1- 2021 153 305

## Description

### TECHNICAL FIELD

The present disclosure relates to fault reporting for a positive temperature coefficient heater (PTC) and, in particular, to resistance temperature detector (RTD) sensor-based fault reporting apparatus and method for a PTC heater.

### BACKGROUND

In aerospace technologies, there is often a requirement to adopt, in a water and waste system of an aircraft for example, a simplified freeze protection heater that can be self-regulated and that has a lightweight and thin construction. A PTC element-based heater has an inherent property of self-regulated heating operation, overheat protection and overload protection. However, with PTC heaters, fault status detection and reporting are still needed and provided by an external device. The fault reporting feature in particular is a mandated requirement for component and/or system health status.

Currently, existing external controllers for use with PTC heaters tend to be large and costly. Their control logic is often incompatible with PTC element-based heaters. Thus, there is a need for a PTC heater that does not require an external controller or device for fault detection and reporting.

WO 2020/180273 A1 discloses a PTC heating unit for vehicles, comprising at least one body for placing inside an air channel, at least one thermal grease which is placed on the body, at least one PTC which is placed on the thermal grease, and at least one strip which is placed on the PTC to provide electrical conductivity. The PTC heating unit also comprises Nano-Graphene Platelets/Particles which are coated on the body, and at least one mixing material which is placed on the strip.

### BRIEF DESCRIPTION

According to an aspect of the disclosure, a positive temperature coefficient (PTC) heater apparatus is provided. The PTC heater apparatus includes a PTC heater, a resistance temperature detector (RTD) sensor mounted to the PTC heater and a controller logic unit electrically connected to the RTD sensor to receive readings of the RTD sensor, which, when the PTC heater is powered on, indicate whether the PTC heater is faulty. The PTC heater apparatus is configured such that the PTC heater is maintained at an initial temperature and powered on at that initial temperature, a temperature of the PTC heater increases once the PTC heater is powered on and a signal from the RTD sensor triggers a timer in the controller logic unit to begin timing an RTD sensing duration of a predefined length of time once the temperature of the PTC heater increases beyond a predefined threshold temperature range. The controller logic unit establishes a predefined range of temperatures and the controller logic unit indicates that the PTC heater is faulty in an event the readings of the RTD sensor indicate that a temperature of the PTC heater is outside the predefined range of temperatures and the timer indicates that the predefined length of time passed.

In accordance with additional or alternative embodiments, the PTC heater includes dielectric layers, a first conducting trace comprising a first conducting trace portion interposed between the dielectric layers, a second conducting trace comprising a second conducting trace portion interposed between the dielectric layers and PTC heating patches, each being electrically connected between the first and second conducting trace portions and interposed between the dielectric layers.

In accordance with additional or alternative embodiments, the RTD sensor is mounted to an exterior face of one of the dielectric layers.

In accordance with additional or alternative embodiments, an insulating layer is disposed about the RTD sensor at the exterior face of the one of the dielectric layers.

In accordance with additional or alternative embodiments, the controller logic unit includes a resistive network filter, which is receptive of a voltage supply and the readings of the RTD sensor, and which outputs a differential signal corresponding to a change in temperature of the PTC heater, a difference amplifier, which is receptive of a voltage supply, and which amplifies the differential signal of the resistive network filter and a multiplexer with an astable timer, which is receptive of multiple signals from the difference amplifier, and which is configured to select one of the multiple signals for analysis by the controller logic unit.

According to an aspect of the disclosure, a positive temperature coefficient (PTC) heater apparatus is provided and includes a PTC heater, multiple resistance temperature detector (RTD) sensors, each of which is mounted to the PTC heater, and a controller logic unit electrically connected to each of the multiple RTD sensors to receive readings of each of the multiple RTD sensors, which, when the PTC heater is powered on, respectively indicate whether the PTC heater is faulty. The PTC heater is maintained at an initial temperature and powered on at that initial temperature, a temperature of the PTC heater increases once the PTC heater is powered on and a signal from any one of the multiple RTD sensors triggers a timer in the controller logic unit to begin timing an RTD sensing duration of a predefined length of time once the temperature of the PTC heater increases beyond a predefined threshold temperature range. The controller logic unit establishes a predefined range of temperatures and the controller logic unit indicates that the PTC heater is faulty in an event the readings of any one of the multiple RTD sensors indicate that a temperature of the PTC heater is outside the predefined range of temperatures and the timer indicates that the predefined length of time passed.

In accordance with additional or alternative embodiments, the PTC heater includes dielectric layers, a first conducting trace comprising a first conducting trace portion interposed between the dielectric layers, a second conducting trace comprising a second conducting trace portion interposed between the dielectric layers and PTC heating patches, each being electrically connected between the first and second conducting trace portions and interposed between the dielectric layers.

In accordance with additional or alternative embodiments, each of the multiple RTD sensors is mounted to an exterior face of one of the dielectric layers.

In accordance with additional or alternative embodiments, an insulating layer is disposed about each of the multiple RTD sensors at the exterior face of the one of the dielectric layers.

In accordance with additional or alternative embodiments, the controller logic unit includes multiple resistive network filters, each of which is receptive of a voltage supply and the readings of a corresponding one of the multiple RTD sensors, and each of which outputs a differential signal corresponding to a change in temperature of the PTC heater, multiple difference amplifiers, each of which is receptive of a voltage supply, and each of which amplifies the differential signal of a corresponding one of the multiple resistive network filters and multiple multiplexers with astable timers, each of which is receptive of multiple signals from a corresponding one of the multiple difference amplifiers, and each of which is configured to select one of the multiple signals for analysis by the controller logic unit.

According to an aspect of the disclosure, a method of operating a positive temperature coefficient (PTC) heater apparatus in which a resistance temperature detector (RTD) sensor is mounted to a PTC heater is provided and includes maintaining the PTC heater at an initial temperature and powering the PTC heater on at the initial temperature, initiating a timer once readings of the RTD sensor indicate that a temperature of the PTC heater increases beyond a predefined threshold temperature range and indicating that the PTC heater is faulty in an event the readings of the RTD sensor indicate that the temperature of the PTC heater is outside a predefined range of temperatures and the timer indicates that a predefined length of time passed.

In accordance with additional or alternative embodiments, the method further includes insulating the RTD sensor from ambient temperatures.

In accordance with additional or alternative embodiments, the method further includes setting the initial temperature at about -55°C, setting the predefined threshold temperature range at about -35°C to about -30°C and setting the predefined range of temperatures at about 10°C to about 80°C.

In accordance with additional or alternative embodiments, the indicating includes indicating that the PTC heater has at least one of an open circuit and insufficient power in an event the readings of the RTD sensor indicate that the temperature of the PTC heater is below the predefined range of temperatures and the timer indicates that the predefined length of time passed.

In accordance with additional or alternative embodiments, the indicating includes indicating that the PTC heater has at least one of a short circuit, negative temperature coefficient (NTC) behavior and damage in an event the readings of the RTD sensor indicate that the temperature of the PTC heater is above the predefined range of temperatures and the timer indicates that the predefined length of time passed.

In accordance with additional or alternative embodiments, multiple RTD sensors are mounted to the PTC heater, the initiating includes initiating a timer once readings of any one of the multiple RTD sensors indicate that a temperature of the PTC heater increases beyond a predefined threshold temperature range and the indicating includes indicating that the PTC heater is faulty in an event the readings of any one of the multiple RTD sensors indicate that the temperature of the PTC heater is outside a predefined range of temperatures and the timer indicates that a predefined length of time passed.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a top-down view of a PTC heater with one RTD sensor apparatus in accordance with embodiments;
FIG. 2 is an enlarged view of the portion of FIG. 1 surrounded by dashed box 150 in accordance with embodiments;
FIG. 3 is a side view of the PTC heater apparatus of FIG. 1 in accordance with embodiments;
FIG. 4 is a top-down view of components of a PTC heater of the PTC heater apparatus of FIG. 1 in accordance with embodiments;
FIG. 5 is a schematic diagram of a controller logic unit of the PTC heater apparatus of FIG. 1;
FIG. 6 is a top-down view of a PTC heater apparatus with multiple RTD sensors in accordance with embodiments; and
FIG. 7 is a flow diagram illustrating a method of operating a positive temperature coefficient (PTC) heater apparatus in accordance with embodiments.

### DETAILED DESCRIPTION

As will be described below, a PTC heater apparatus is provided in which an RTD temperature sensor is mounted on a PTC heater (multiple RTD temperature sensors can be provided for large PTC heaters). Controller logic will be packed in a separate enclosure (i.e., in a potted or metal case) that is connected to RTD sensor. A fault reporting device will be connected in line with the PTC heater. The PTC heater will be maintained at -55°C ambient and powered on, at which point, the heater temperature will increase. The RTD temperature sensor resistance begins changing based on the temperature increase (or decrease). When the heater temperature crosses between a given temperature (e.g., -35°C to -30°C), a sensing signal from the RTD sensor will trigger a timer in the controller logic to indicate a good status for a set heating duration. The heating duration is set to avoid false heater fault reports during the ramp up of the heater from the -55°C ambient and can be based on test data of multiple heaters with different power densities.

In some exemplary cases, the controller logic will report the good status when the temperature of the heater is between a given range of temperatures (e.g., 10°C to 80°C) after the heater is powered on and will report a fault status when the temperature of the heater is below the range, which is indicative of there being an open circuit incident or insufficient power due to PTC element damage. In other exemplary cases, the controller logic will report a fault status when the heater temperature is above the range, which is indicative of a short circuit, negative temperature coefficient (NTC) behavior or PTC property degradation.

Thus, the proposed fault reporting apparatus and method covers detections of failure modes such as heater open, insufficient power due to heating patch damage, heater short and heater resistance increase due to PTC property degradation.

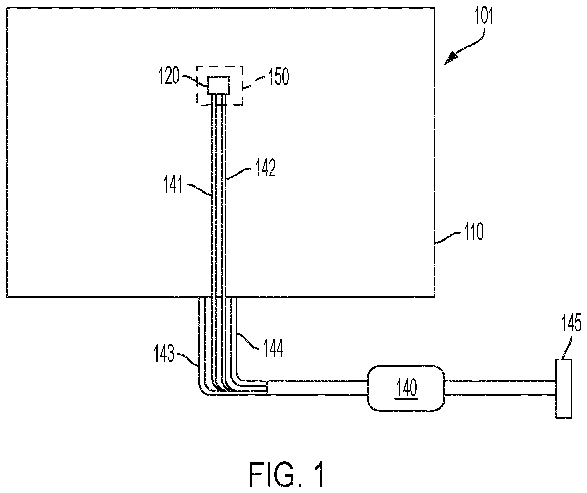

With reference to FIG. 1, a PTC heater apparatus 101 is provided and includes a PTC heater 110, an RTD sensor 120 that is mounted to the PTC heater 110 and a controller logic unit 140. The controller logic unit 140 is electrically connected to at least the RTD sensor 120 and is configured to receive readings of the RTD sensor 120. The readings of the RTD sensor 120 can indicate whether the PTC heater 110 is faulty when the PTC heater 110 is powered on. A connector 145 can be connected to the controller logic unit 140 so that the controller logic unit 140 can be communicative with an external device (i.e., an external computing device and display).

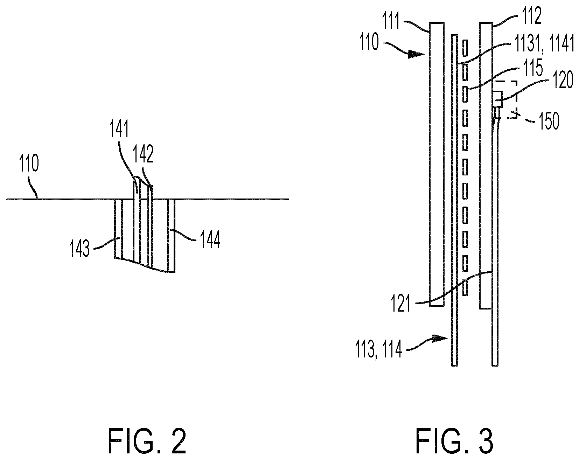

With continued reference to FIG. 1 and with additional reference to FIG. 2, the controller logic unit 140 is electrically connected to the RTD sensor 120 by way of first and second conductive lines 141 and 142, which provide electrical output from the RTD sensor 120 to the controller logic unit 140. In addition, the controller logic unit 140 can be connected to the PTC heater 110 by a first "line" conductor 143 and by a second "return" conductor 144 which are the supply connections to the PTC heater 110.

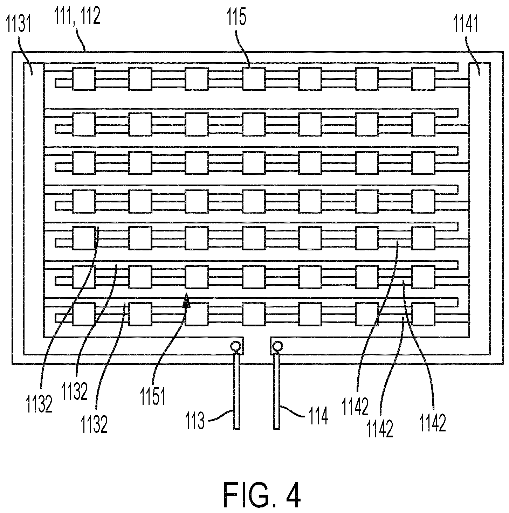

With continued reference to FIG. 1 and with additional reference to FIGS. 3 and 4, the PTC heater 110 includes first and second dielectric layers 111 and 112, which can include or be provided as thermoplastic, a first conducting trace 113, a second conducting trace 114 and PTC heating patches 115. The first conducting trace 113 includes a first conducting trace portion 1131, which is interposed between the first and second dielectric layers 111 and 112, and the second conducting trace 114 includes a second conducting trace portion 1141, which is interposed between the first and second dielectric layers 111 and 112. The PTC heating patches 115 are each electrically connected between the first and second conducting trace portions 1131 and 1141 and are each interposed between the first and second dielectric layers 111 and 112. Each of the PTC heating patches 115 can be formed of an electrical resistance heater material whose resistance increases significantly with temperature.

As shown in FIG. 3, the RTD sensor 120 can be mounted to an exterior face 121 of one of the first and second dielectric layers 111 and 112. Also, the PTC heater apparatus 101 can additionally include an insulating layer 150. The insulating layer 150 is disposed about the RTD sensor 120 at the exterior face 121.

As shown in FIG. 4, the first and second conducting trace portions 1131 and 1141 can be patterned along peripheral sides of the first and second dielectric layers 111 and 112 and can include first and second crossing traces 1132 and 1142 that extend across the first and second dielectric layers 111 and 112 in an interleaved formation. Each of the PTC heating patches 115 can be arranged in a lattice formation 1151 to electrically connect between proximal portions of the first and second crossing traces 1132 and 1142. With this configuration, voltage applied to the PTC heater 110 results in a generally uniform heating pattern in the absence of a fault in the PTC heater 110.

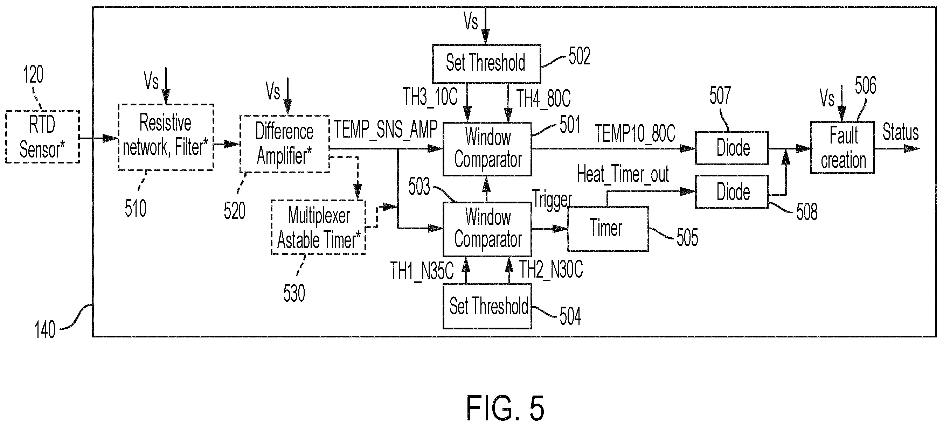

With reference to FIG. 5, the controller logic unit 140 includes a first window comparator 501, a first threshold setting unit 502, which is receptive of a voltage supply and which sets a predefined range of temperatures for the first window comparator 501, a second window comparator 503 and a second threshold setting unit 504, which sets a predefined threshold temperature range for the second window comparator 503. The controller logic unit 140 further includes a timer 505 downstream from the second window comparator 503, a fault creation unit 506, which is receptive of a voltage supply, and first and second diodes 507 and 508. The first diode 507 is electrically interposed between the first window comparator 501 and the fault creation unit 506 and the second diode 508 is electrically interposed between the timer 505 and the fault creation unit 506.

In addition, as shown in FIG. 5, the controller logic unit 140 includes a resistive network filter 510, a difference amplifier 520 and a multiplexer with an astable timer 530. The resistive network filter 510 is receptive of a voltage supply and the readings of the RTD sensor 120. The resistive network filter 510 also outputs a differential signal that corresponds to a change in temperature of the PTC heater 110 (see FIG. 1). The difference amplifier 520 is receptive of a voltage supply and amplifies the differential signal of the resistive network filter 510. Outputs of the difference amplifier 520 are provided to the first and second window comparators 501 and 503. The multiplexer with the astable timer 530 is receptive of multiple signals from the difference amplifier 520 and is configured to select one of the multiple signals for analysis by the controller logic unit. An output of the multiplexer with the astable timer 530 is output to the first and second window comparators 501 and 503.

The following will describe an operation of the PTC heater apparatus 101 described above refers to various temperatures. These temperatures are exemplary and not intended to otherwise limit the scope of the application in any way.

In an operation of the PTC heater apparatus 101, with the controller logic unit 140 provided as described above, the PTC heater 110 is maintained at an initial temperature of about -55°C and is powered on at that initial temperature. The temperature of the PTC heater 110 increases once the PTC heater 110 is powered on. A signal from the RTD sensor 120 triggers the timer 505 to begin timing an RTD sensing duration of a predefined length of time, such as five minutes or five seconds, for example, once the temperature of the PTC heater 110 increases beyond the predefined threshold temperature range of about -35°C to about -30°C as set by the second threshold setting unit 504. The controller logic unit 140 is configured to establish the predefined range of temperatures, such as about 10°C to about 80°C as set by the first threshold setting unit 502.

The controller logic unit 140 is further configured to indicate that the PTC heater 110 is faulty (i.e., in a faulty condition) in an event the readings of the RTD sensor 120 indicate that a temperature of the PTC heater 110 is outside the predefined range of temperatures and the timer indicates that the predefined length of time passed. In greater detail, the controller logic unit 140 can indicate that the PTC heater 110 has at least one of an open circuit and insufficient power in an event the readings of the RTD sensor 120 indicate that the temperature of the PTC heater 110 is below the predefined range of temperatures (i.e., below about 10°C) and the timer 505 indicates that the predefined length of time passed. Conversely, the controller logic unit 140 can indicate that the PTC heater 110 has at least one of a short circuit, negative temperature coefficient (NTC) behavior and damage in an event the readings of the RTD sensor 120 indicate that the temperature of the PTC heater 110 is above the predefined range of temperatures (i.e., above about 80°C) and the timer 505 indicates that the predefined length of time passed.

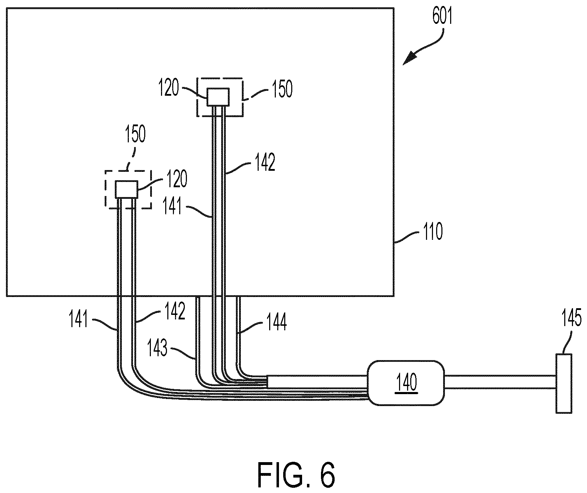

With reference to FIG. 6, a PTC heater apparatus 601 is provided and includes similar features as the PTC heater apparatus 101 of FIG. 1 except that multiple resistance temperature detector (RTD) sensors 120 are mounted to the PTC heater 110 and the controller logic unit 140 is electrically connected to each of the multiple RTD sensors 120 to receive readings of each of the multiple RTD sensors 120, which, when the PTC heater 110 is powered on, respectively indicate whether the PTC heater 110 is faulty. Though not specifically shown in FIGS. 5 and 6, in the PTC heater apparatus 601 of FIG. 6, the controller logic unit 140 can include, but is not required to include, multiple resistive network filters 510, multiple difference amplifiers 520 and multiple multiplexer with the astable timers 530 (see FIG. 5). The multiple resistive network filters 510, the multiple difference amplifiers 520 and the multiple multiplexers with the astable timers 530 operate similarly as described above for each of the multiple RTD sensors 120.

In accordance with embodiments, there can be RTD sensors 120 of multiple number like 1, 2, 4, 8, etc. depending on heater size and requirements to increase the sensing area. For example, if there are two RTD sensors 120 in a large PTC heater 110, there can be two resistive network filters 510, two difference amplifiers 520 and one multiplexer (4:1) with one astable timer 530.

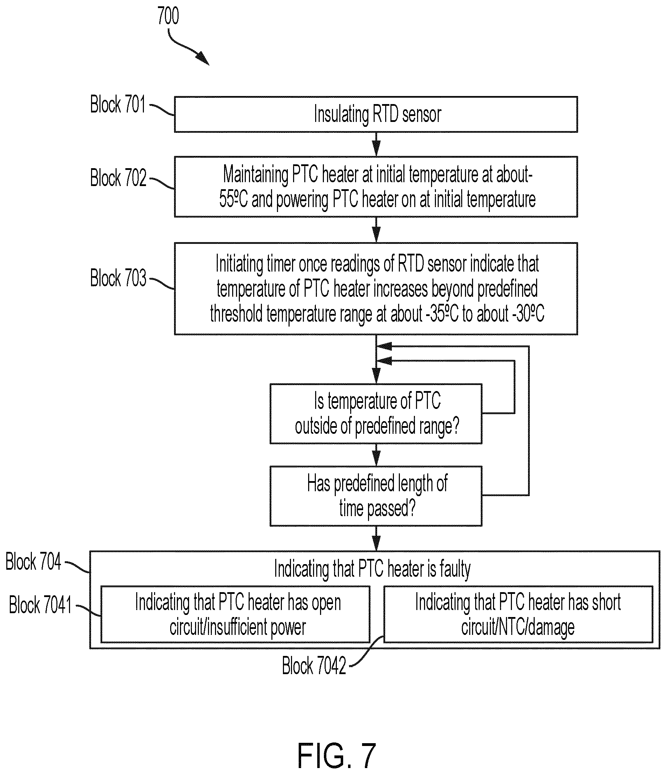

With reference to FIG. 7, a method 700 of operating a PTC heater apparatus, in which an RTD sensor is mounted to a PTC heater as described above (or in which multiple RTD sensors are mounted to a PTC heater), is provided. As shown in FIG. 7, the method 700 includes insulating the RTD sensor from ambient temperatures (block 701), maintaining the PTC heater at an initial temperature at about -55°C and powering the PTC heater on at the initial temperature (block 702), initiating a timer once readings of the RTD sensor indicate that a temperature of the PTC heater increases beyond a predefined threshold temperature range at about -35°C to about - 30°C (block 703) and indicating that the PTC heater is faulty in an event the readings of the RTD sensor indicate that the temperature of the PTC heater is outside a predefined range of temperatures, which are set at about 10°C to about 80°C, and the timer indicates that a predefined length of time passed (block 704). In accordance with embodiments, the indicating of block 704 can include indicating that the PTC heater has at least one of an open circuit and insufficient power in an event the readings of the RTD sensor indicate that the temperature of the PTC heater is below the predefined range of temperatures and the timer indicates that the predefined length of time passed (block 7041) or indicating that the PTC heater has at least one of a short circuit, negative temperature coefficient (NTC) behavior and damage in an event the readings of the RTD sensor indicate that the temperature of the PTC heater is above the predefined range of temperatures and the timer indicates that the predefined length of time passed (block 7042).

Technical effects and benefits of the present disclosure are the provision of an RTD temperature sensor mounted on a PTC heater to provide fault detection and reporting that meets requirements in a simple, cost effective and non-programmed manner. The RTD temperature sensor can be generic to any type of PTC heater, such that no configuration or re-configuration of the PTC heater or the RTD temperature sensor is required. The mounting of the RTD temperature sensor can be relatively easily adopted for multiple sensing inputs for a large PTC heater.

The corresponding structures, materials, acts, and equivalents of all means or step-plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope of the claims.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A positive temperature coefficient, PTC, heater apparatus (101), comprising:
a PTC heater (110);
a resistance temperature detector, RTD, sensor (120) mounted to the PTC heater; and
a controller logic unit (140) electrically connected to the RTD sensor to receive readings of the RTD sensor, which, when the PTC heater is powered on, indicate whether the PTC heater is faulty,
wherein the PTC heater apparatus is configured such that the PTC heater is maintained at an initial temperature and powered on at that initial temperature, a temperature of the PTC heater increases once the PTC heater is powered on, and a signal from the RTD sensor triggers a timer (505) in the controller logic unit to begin timing an RTD sensing duration of a predefined length of time once the temperature of the PTC heater increases beyond a predefined threshold temperature range,
whereby the controller logic unit establishes a predefined range of temperatures, and the controller logic unit indicates that the PTC heater is faulty in an event the readings of the RTD sensor indicate that a temperature of the PTC heater is outside the predefined range of temperatures and the timer indicates that the predefined length of time passed.

2. The PTC heater apparatus (101) according to claim 1, wherein the PTC heater (110) comprises:
dielectric layers (111, 112);
a first conducting trace (113) comprising a first conducting trace portion (1131) interposed between the dielectric layers;
a second conducting trace (114) comprising a second conducting trace portion (1141) interposed between the dielectric layers; and
PTC heating patches (115), each being electrically connected between the first and second conducting trace portions and interposed between the dielectric layers.

3. The PTC heater apparatus (101) according to claim 2, wherein the RTD sensor (120) is mounted to an exterior face (121) of one of the dielectric layers (111, 112).

4. The PTC heater apparatus (101) according to claim 3, further comprising an insulating layer (150) disposed about the RTD sensor (120) at the exterior face (121) of the one of the dielectric layers (111, 112).

5. The PTC heater apparatus (101) according to any preceding claim, wherein the controller logic unit (140) comprises:
a resistive network filter (510), which is receptive of a voltage supply and the readings of the RTD sensor (120), and which outputs a differential signal corresponding to a change in temperature of the PTC heater (110); and
a difference amplifier (520), which is receptive of a voltage supply, and which amplifies the differential signal of the resistive network filter.

6. A positive temperature coefficient, PTC, heater apparatus (101), comprising:
a PTC heater (110);
multiple resistance temperature detector, RTD, sensors (120), each of which is mounted to the PTC heater (110); and
a controller logic unit (140) electrically connected to each of the multiple RTD sensors to receive readings of each of the multiple RTD sensors, which, when the PTC heater is powered on, respectively indicate whether the PTC heater is faulty,
wherein the PTC heater apparatus is configured such that the PTC heater is maintained at an initial temperature and powered on at that initial temperature, a temperature of the PTC heater increases once the PTC heater is powered on and a signal from any one of the multiple RTD sensors triggers a timer (505) in the controller logic unit to begin timing an RTD sensing duration of a predefined length of time once the temperature of the PTC heater increases beyond a predefined threshold temperature range,
whereby the controller logic unit establishes a predefined range of temperatures, and the controller logic unit indicates that the PTC heater is faulty in an event the readings of any one of the multiple RTD sensors indicate that a temperature of the PTC heater is outside the predefined range of temperatures and the timer indicates that the predefined length of time passed

7. The PTC heater apparatus (101) according to claim 6, wherein the PTC heater (110) comprises:
dielectric layers (111, 112);
a first conducting trace (113) comprising a first conducting trace portion (1131) interposed between the dielectric layers,
a second conducting trace (114) comprising a second conducting trace portion interposed between the dielectric layers; and
PTC heating patches (115), each being electrically connected between the first and second conducting trace portions and interposed between the dielectric layers.

8. The PTC heater apparatus (101) according to claim 7, wherein each of the multiple RTD sensors (120) is mounted to an exterior face (121) of one of the dielectric layers (111, 112).

9. The PTC heater apparatus (101) according to claim 7 or 8, further comprising an insulating layer (150) disposed about each of the multiple RTD sensors (120) at the exterior face (121) of the one of the dielectric layers (111, 112).

10. The PTC heater apparatus (101) according to any of claims 6 to 9 wherein the controller logic unit (140) comprises:
multiple resistive network filters (510), each of which is receptive of a voltage supply and the readings of a corresponding one of the multiple RTD sensors (120), and each of which outputs a differential signal corresponding to a change in temperature of the PTC heater (110); and
multiple difference amplifiers (520), each of which is receptive of a voltage supply, and each of which amplifies the differential signal of a corresponding one of the multiple resistive network filters.

11. A method (700) of operating a positive temperature coefficient, PTC, heater apparatus (101) in which a resistance temperature detector, RTD, sensor (120) is mounted to a PTC heater (110), the method comprising:
maintaining the PTC heater at an initial temperature and powering the PTC heater on at the initial temperature;
initiating a timer (505) once readings of the RTD sensor indicate that a temperature of the PTC heater increases beyond a predefined threshold temperature range; and
indicating that the PTC heater is faulty in an event the readings of the RTD sensor indicate that the temperature of the PTC heater is outside a predefined range of temperatures and the timer indicates that a predefined length of time passed.

12. The method (700) according to claim 11, further comprising insulating the RTD sensor (120) from ambient temperatures.

13. The method according to claim 11 or 12, further comprising:
setting the initial temperature at about -55°C;
setting the predefined threshold temperature range at about -35°C to about - 30°C; and
setting the predefined range of temperatures at about 10°C to about 80°C.

14. The method (700) according to claim 11, 12 or 13, wherein the indicating comprises indicating that the PTC heater (110) has at least one of an open circuit and insufficient power in an event the readings of the RTD sensor (120) indicate that the temperature of the PTC heater is below the predefined range of temperatures and the timer (505) indicates that the predefined length of time passed.

15. The method (700) according to any of claims 11 to 14, wherein the indicating comprises indicating that the PTC heater has at least one of a short circuit, negative temperature coefficient, NTC, behavior and damage in an event the readings of the RTD sensor indicate that the temperature of the PTC heater is above the predefined range of temperatures and the timer indicates that the predefined length of time passed; and/or
wherein:
multiple RTD sensors are mounted to the PTC heater,
the initiating comprises initiating a timer once readings of any one of the multiple RTD sensors indicate that a temperature of the PTC heater increases beyond a predefined threshold temperature range, and
the indicating comprises indicating that the PTC heater is faulty in an event the readings of any one of the multiple RTD sensors indicate that the temperature of the PTC heater is outside a predefined range of temperatures and the timer indicates that a predefined length of time passed.

## Patentansprüche

1. Heizeinrichtung mit positivem Temperaturkoeffizienten, PTC, (101), umfassend:
einen PTC-Heizer (110);
einen Widerstandstemperaturdetektor(RTD)-Sensor (120), der an dem PTC-Heizer angebracht ist; und
eine Steuerlogikeinheit (140), die elektrisch mit dem RTD-Sensor verbunden ist, um Messwerte des RTD-Sensors zu empfangen, die, wenn der PTC-Heizer eingeschaltet ist, anzeigen, ob der PTC-Heizer defekt ist,
wobei die PTC-Heizeinrichtung derart konfiguriert ist, dass der PTC-Heizer auf einer Anfangstemperatur gehalten und bei dieser Anfangstemperatur eingeschaltet wird, eine Temperatur des PTC-Heizers ansteigt, sobald der PTC-Heizer eingeschaltet ist und ein Signal von dem RTD-Sensor einen Timer (505) in der Steuerlogikeinheit auslöst, um ein Messen einer RTD-Erfassungsdauer mit einer vordefinierten Zeitdauer zu starten, sobald die Temperatur des PTC-Heizers über einen vordefinierten Temperatur-Schwellenwertbereich hinaus ansteigt,
wodurch die Steuerlogikeinheit einen vordefinierten Temperaturbereich festlegt und die Steuerlogikeinheit anzeigt, dass der PTC-Heizer defekt ist, falls die Messwerte des RTD-Sensors anzeigen, dass eine Temperatur des PTC-Heizers außerhalb des vordefinierten Temperaturbereichs ist und der Timer anzeigt, dass die vordefinierte Zeitdauer verstrichen ist.

2. PTC-Heizeinrichtung (101) nach Anspruch 1, wobei der PTC-Heizer (110) Folgendes umfasst:
dielektrische Schichten (111, 112);
eine erste Leiterbahn (113), die einen ersten Leiterbahnabschnitt (1131) umfasst, der zwischen den dielektrischen Schichten zwischengeschaltet ist;
eine zweite Leiterbahn (114), die einen zweiten Leiterbahnabschnitt (1141) umfasst, der zwischen den dielektrischen Schichten zwischengeschaltet ist; und
PTC-Heizelemente (115), die jeweils elektrisch zwischen dem ersten und zweiten Leiterbahnabschnitt verbunden und zwischen den dielektrischen Schichten zwischengeschaltet sind.

3. PTC-Heizeinrichtung (101) nach Anspruch 2, wobei der RTD-Sensor (120) an einer Außenfläche (121) einer der dielektrischen Schichten (111, 112) angebracht ist.

4. PTC-Heizeinrichtung (101) nach Anspruch 3, ferner umfassend eine Isolierschicht (150), die um den RTD-Sensor (120) an der Außenfläche (121) einer der dielektrischen Schichten (111, 112) angeordnet ist.

5. PTC-Heizeinrichtung (101) nach einem der vorhergehenden Ansprüche, wobei die Steuerlogikeinheit (140) Folgendes umfasst:
einen Widerstandsnetzwerkfilter (510), der eine Spannungsversorgung und die Messwerte des RTD-Sensors (120) empfängt und der ein Differenzsignal ausgibt, das einer Temperaturänderung des PTC-Heizers (110) entspricht; und
einen Differenzverstärker (520), der eine Spannungsversorgung empfängt und der das Differenzsignal des Widerstandsnetzwerkfilters verstärkt.

6. Heizeinrichtung mit positivem Temperaturkoeffizienten, PTC, (101), umfassend:
einen PTC-Heizer (110);
mehrere Widerstandstemperaturdetektor(RTD)-Sensoren (120), von denen jeder an dem PTC-Heizer (110) angebracht ist; und
eine Steuerlogikeinheit (140), die elektrisch mit jedem der mehreren RTD-Sensoren verbunden ist, um Messwerte von jedem der mehreren RTD-Sensoren zu empfangen, die, wenn der PTC-Heizer eingeschaltet ist, jeweils anzeigen, ob der PTC-Heizer defekt ist,
wobei die PTC-Heizeinrichtung derart konfiguriert ist, dass der PTC-Heizer auf einer Anfangstemperatur gehalten und bei dieser Anfangstemperatur eingeschaltet wird, eine Temperatur des PTC-Heizers ansteigt, sobald der PTC-Heizer eingeschaltet ist und ein Signal von einem beliebigen der mehreren RTD-Sensoren einen Timer (505) in der Steuerlogikeinheit auslöst, um ein Messen einer RTD-Erfassungsdauer mit einer vordefinierten Zeitdauer zu starten, sobald die Temperatur des PTC-Heizers über einen vordefinierten Temperatur-Schwellenwertbereich hinaus ansteigt,
wodurch die Steuerlogikeinheit einen vordefinierten Temperaturbereich festlegt und die Steuerlogikeinheit anzeigt, dass der PTC-Heizer defekt ist, falls die Messwerte eines beliebigen der mehreren RTD-Sensoren anzeigen, dass eine Temperatur des PTC-Heizers außerhalb des vordefinierten Temperaturbereichs ist und der Timer anzeigt, dass die vordefinierte Zeitdauer verstrichen ist.

7. PTC-Heizeinrichtung (101) nach Anspruch 6, wobei der PTC-Heizer (110) Folgendes umfasst:
dielektrische Schichten (111, 112);
eine erste Leiterbahn (113), die einen ersten Leiterbahnabschnitt (1131) umfasst, der zwischen den dielektrischen Schichten zwischengeschaltet ist,
eine zweite Leiterbahn (114), die einen zweiten Leiterbahnabschnitt umfasst, der zwischen den dielektrischen Schichten zwischengeschaltet ist; und
PTC-Heizelemente (115), die jeweils elektrisch zwischen dem ersten und zweiten Leiterbahnabschnitt verbunden und zwischen den dielektrischen Schichten zwischengeschaltet sind.

8. PTC-Heizeinrichtung (101) nach Anspruch 7, wobei jeder der mehreren RTD-Sensoren (120) an einer Außenfläche (121) einer der dielektrischen Schichten (111, 112) angebracht ist.

9. PTC-Heizeinrichtung (101) nach Anspruch 7 oder 8, ferner umfassend eine Isolierschicht (150), die um jeden der mehreren RTD-Sensoren (120) an der Außenfläche (121) einer der dielektrischen Schichten (111, 112) angeordnet ist.

10. PTC-Heizeinrichtung (101) nach einem der Ansprüche 6 bis 9, wobei die Steuerlogikeinheit (140) Folgendes umfasst:
mehrere Widerstandsnetzwerkfilter (510), wovon jeder eine Spannungsversorgung und die Messwerte von einem entsprechenden der mehreren RTD-Sensoren (120) empfängt und wovon jeder ein Differenzsignal ausgibt, das einer Temperaturänderung des PTC-Heizers (110) entspricht; und
mehrere Differenzverstärker (520), wovon jeder eine Spannungsversorgung empfängt und wovon jeder das Differenzsignal eines entsprechenden der mehreren Widerstandsnetzwerkfilter verstärkt.

11. Verfahren (700) zum Betreiben einer Heizeinrichtung mit positivem Temperaturkoeffizienten, PTC, (101), bei dem ein Widerstandstemperaturdetektor(RTD)-Sensor (120) an einem PTC-Heizer (110) angebracht ist, wobei das Verfahren Folgendes umfasst:
Halten des PTC-Heizers auf einer Anfangstemperatur und Einschalten des PTC-Heizers bei der Anfangstemperatur;
Starten eines Timers (505), sobald Messwerte des RTD-Sensors anzeigen, dass eine Temperatur des PTC-Heizers über einen vordefinierten Temperatur-Schwellenwertbereich hinaus ansteigt; und
Anzeigen, dass der PTC-Heizer defekt ist, falls die Messwerte des RTD-Sensors anzeigen, dass die Temperatur des PTC-Heizers außerhalb eines vordefinierten Temperaturbereichs ist und der Timer anzeigt, dass eine vordefinierte Zeitdauer verstrichen ist.

12. Verfahren (700) nach Anspruch 11, ferner umfassend ein Isolieren des RTD-Sensors (120) vor Umgebungstemperaturen.

13. Verfahren nach Anspruch 11 oder 12, ferner umfassend:
Einstellen der Anfangstemperatur auf etwa -55 °C;
Einstellen des vordefinierten Temperatur-Schwellenwertbereichs auf etwa -35 °C bis etwa -30 °C; und
Einstellen des vordefinierten Temperaturbereichs auf etwa 10 °C bis etwa 80 °C.

14. Verfahren (700) nach Anspruch 11, 12 oder 13, wobei das Anzeigen ein Anzeigen umfasst, dass der PTC-Heizer (110) mindestens eines von einem offenen Stromkreis und unzureichender Leistung aufweist, falls die Messwerte des RTD-Sensors (120) anzeigen, dass die Temperatur des PTC-Heizers unterhalb des vordefinierten Temperaturbereichs ist, und der Timer (505) anzeigt, dass die vordefinierte Zeitdauer verstrichen ist.

15. Verfahren (700) nach einem der Ansprüche 11 bis 14, wobei das Anzeigen das Anzeigen umfasst, dass der PTC-Heizer mindestens eines von einem Kurzschluss, negativen Temperaturkoeffizienten(NTC)-Verhalten und Beschädigung aufweist, falls die Messwerte des RTD-Sensors anzeigen, dass die Temperatur des PTC-Heizers über dem vordefinierten Temperaturbereich ist und der Timer anzeigt, dass die vordefinierte Zeitdauer verstrichen ist; und/oder wobei:
mehrere RTD-Sensoren an dem PTC-Heizer angebracht sind,
das Initiieren ein Initiieren eines Timers umfasst, sobald Messwerte eines beliebigen der mehreren RTD-Sensoren anzeigen, dass eine Temperatur des PTC-Heizers über einen vordefinierten Temperatur-Schwellenwertbereich hinaus ansteigt, und
das Anzeigen ein Anzeigen umfasst, dass der PTC-Heizer defekt ist, falls die Messwerte eines beliebigen der mehreren RTD-Sensoren anzeigen, dass die Temperatur des PTC-Heizers außerhalb eines vordefinierten Temperaturbereichs ist und der Timer anzeigt, dass eine vordefinierte Zeitdauer verstrichen ist.

## Revendications

1. Appareil de chauffage à coefficient de température positif, PTC, (101), comprenant :
un dispositif de chauffage PTC (110) ;
un capteur de détecteur de température de résistance, RTD, (120) monté sur le dispositif de chauffage PTC ; et
une unité logique de dispositif de commande (140) connectée électriquement au capteur RTD pour recevoir des lectures du capteur RTD, qui, lorsque le dispositif de chauffage PTC est mis sous tension, indiquent si le dispositif de chauffage PTC est défectueux,
dans lequel l'appareil de chauffage PTC est configuré de sorte que le dispositif de chauffage PTC est maintenu à une température initiale et mise sous tension à cette température initiale, une température du dispositif de chauffage PTC augmente une fois que le dispositif de chauffage PTC est mis sous tension, et un signal provenant du capteur RTD déclenche un temporisateur (505) dans l'unité logique de dispositif de commande pour commencer à chronométrer une durée de détection RTD d'une longueur de temps prédéfinie une fois que la température du dispositif de chauffage PTC augmente au-delà d'une plage de température seuil prédéfinie,
moyennant quoi l'unité logique de dispositif de commande établit une plage de températures prédéfinie et l'unité logique de dispositif de commande indique que le dispositif de chauffage PTC est défectueux lorsque les lectures du capteur RTD indiquent qu'une température du dispositif de chauffage PTC est en dehors de la plage de températures prédéfinie et que le temporisateur indique que la longueur de temps prédéfinie s'est écoulée.

2. Appareil de chauffage PTC (101) selon la revendication 1, dans lequel le dispositif de chauffage PTC (110) comprend :
des couches diélectriques (111, 112) ;
une première piste conductrice (113) comprenant une première portion de piste conductrice (1131) interposée entre les couches diélectriques ;
une seconde piste conductrice (114) comprenant une seconde portion de piste conductrice (1141) interposée entre les couches diélectriques ; et
des patchs chauffants PTC (115), chacun étant connecté électriquement entre les première et seconde portions de piste conductrice et interposé entre les couches diélectriques.

3. Appareil de chauffage PTC (101) selon la revendication 2, dans lequel le capteur RTD (120) est monté sur une face extérieure (121) de l'une des couches diélectriques (111, 112).

4. Appareil de chauffage PTC (101) selon la revendication 3, comprenant en outre une couche isolante (150) disposée autour du capteur RTD (120) au niveau de la face extérieure (121) de l'une des couches diélectriques (111, 112).

5. Appareil de chauffage PTC (101) selon une quelconque revendication précédente, dans lequel l'unité logique de dispositif de commande (140) comprend :
un filtre à réseau résistif (510), qui reçoit une alimentation en tension et les lectures du capteur RTD (120), et qui produit un signal différentiel correspondant à une variation de température du dispositif de chauffage PTC (110) ; et
un amplificateur différentiel (520), qui reçoit une alimentation en tension et qui amplifie le signal différentiel du filtre à réseau résistif.

6. Appareil de chauffage à coefficient de température positif, PTC, (101), comprenant :
un dispositif de chauffage PTC (110) ;
de multiples capteurs de détecteur de température de résistance, RTD, (120), chacun étant monté sur le dispositif de chauffage PTC (110) ; et
une unité logique de dispositif de commande (140) connectée électriquement à chacun des multiples capteurs RTD pour recevoir des lectures de chacun des multiples capteurs RTD, qui, lorsque le dispositif de chauffage PTC est mis sous tension, indiquent respectivement si le dispositif de chauffage PTC est défectueux,
dans lequel l'appareil de chauffage PTC est configuré de sorte que le dispositif de chauffage PTC est maintenu à une température initiale et mis sous tension à cette température initiale, une température du dispositif de chauffage PTC augmente une fois que le dispositif de chauffage PTC est mis sous tension, et un signal provenant de l'un quelconque des multiples capteurs RTD déclenche un temporisateur (505) dans l'unité logique de dispositif de commande pour commencer à chronométrer une durée de détection RTD d'une longueur de temps prédéfinie une fois que la température du dispositif de chauffage PTC augmente au-delà d'une plage de température seuil prédéfinie,
moyennant quoi l'unité logique de dispositif de commande établit une plage de températures prédéfinie et l'unité logique de dispositif de commande indique que le dispositif de chauffage PTC est défectueux lorsque les lectures de l'un quelconque des multiples capteurs RTD indiquent qu'une température du dispositif de chauffage PTC est en dehors de la plage de températures prédéfinie et que le temporisateur indique que la longueur de temps prédéfinie s'est écoulée.

7. Appareil de chauffage PTC (101) selon la revendication 6, dans lequel le dispositif de chauffage PTC (110) comprend :
des couches diélectriques (111, 112) ;
une première piste conductrice (113) comprenant une première portion de piste conductrice (1131) interposée entre les couches diélectriques,
une seconde piste conductrice (114) comprenant une seconde portion de piste conductrice interposée entre les couches diélectriques ; et
des patchs chauffants PTC (115), chacun étant connecté électriquement entre les première et seconde portions de piste conductrice et interposé entre les couches diélectriques.

8. Appareil de chauffage PTC (101) selon la revendication 7, dans lequel chacun des multiples capteurs RTD (120) est monté sur une face extérieure (121) de l'une des couches diélectriques (111, 112).

9. Appareil de chauffage PTC (101) selon la revendication 7 ou 8, comprenant en outre une couche isolante (150) disposée autour de chacun des multiples capteurs RTD (120) au niveau de la face extérieure (121) de l'une des couches diélectriques (111, 112).

10. Appareil de chauffage PTC (101) selon l'une quelconque des revendications 6 à 9, dans lequel l'unité logique de dispositif de commande (140) comprend :
de multiples filtres à réseau résistif (510), chacun recevant une alimentation en tension et les lectures d'un capteur RTD correspondant parmi les multiples capteurs RTD (120), et chacun produisant un signal différentiel correspondant à une variation de température du dispositif de chauffage PTC (110) ; et
de multiples amplificateurs différentiels (520), chacun recevant une alimentation en tension, et chacun amplifiant le signal différentiel d'un filtre à réseau résistif correspondant parmi les multiples filtres à réseau résistif.

11. Procédé (700) de fonctionnement d'un appareil de chauffage à coefficient de température positif (PTC) (101) dans lequel un capteur de détecteur de température de résistance, RTD, (120) est monté sur un dispositif de chauffage PTC (110), le procédé comprenant :
le maintien du dispositif de chauffage PTC à une température initiale et la mise sous tension du dispositif de chauffage PTC à la température initiale ;
le déclenchement d'un temporisateur (505) une fois que les lectures du capteur RTD indiquent qu'une température du dispositif de chauffage PTC augmente au-delà d'une plage de température seuil prédéfinie ; et
l'indication que le dispositif de chauffage PTC est défectueux lorsque les lectures du capteur RTD indiquent que la température du dispositif de chauffage PTC est en dehors d'une plage de températures prédéfinie et que le temporisateur indique qu'une longueur de temps prédéfinie s'est écoulée.

12. Procédé (700) selon la revendication 11, comprenant en outre l'isolation du capteur RTD (120) des températures ambiantes.

13. Procédé selon la revendication 11 ou 12, comprenant en outre :
le réglage de la température initiale à environ -55 °C ;
le réglage de la plage de température seuil prédéfinie entre environ -35 °C et environ -30 °C ; et
le réglage de la plage de températures prédéfinie entre environ 10 °C et environ 80 °C.

14. Procédé (700) selon la revendication 11, 12 ou 13, dans lequel l'indication comprend l'indication que le dispositif de chauffage PTC (110) a au moins l'un d'un circuit ouvert et d'une puissance insuffisante lorsque les lectures du capteur RTD (120) indiquent que la température du dispositif de chauffage PTC est inférieure à la plage de températures prédéfinie et que le temporisateur (505) indique que la longueur de temps prédéfinie s'est écoulée.

15. Procédé (700) selon l'une quelconque des revendications 11 à 14, dans lequel l'indication comprend l'indication que le dispositif de chauffage PTC a au moins l'un d'un court-circuit, d'un comportement à coefficient de température négatif, NTC, et d'un endommagement lorsque les lectures du capteur RTD indiquent que la température du dispositif de chauffage PTC est supérieure à la plage de températures prédéfinie et que le temporisateur indique que la longueur de temps prédéfinie s'est écoulée ; et/ou
dans lequel :
de multiples capteurs RTD sont montés sur le dispositif de chauffage PTC,
le déclenchement comprend le déclenchement d'un temporisateur une fois que les lectures de l'un quelconque des multiples capteurs RTD indiquent qu'une température du dispositif de chauffage PTC augmente au-delà d'une plage de température seuil prédéfinie ; et
l'indication comprend l'indication que le dispositif de chauffage PTC est défectueux lorsque les lectures de l'un quelconque des multiples capteurs RTD indiquent que la température du dispositif de chauffage PTC est en dehors d'une plage de températures prédéfinie et que le temporisateur indique qu'une longueur de temps prédéfinie s'est écoulée.
